# EUROPEAN PATENT APPLICATION

(11) **EP 1 154 357 A2**
(43) Date of publication of application: **14.11.2001**
(21) Application number: 01110153.2
(22) Date of filing: 04.05.2001
(51) Int. Cl.: G06F 17/30

(54) **Electronic information transmission method and electronic information transmission system**

(30) Priority: 12.05.2000 JP 2000140172
(71) Applicant: NEC CORPORATION, Tokyo (JP)
(72) Inventor: Hirose, Masami, Minato-ku, Tokyo (JP); Hata, Masahiro, Minato-ku, Tokyo (JP)
(74) Representative: VOSSIUS & PARTNER

(57) **Abstract**

When transmitting prescribed information using an information page that is supplied from a communication means, designating information that is displayed on the information page to allow the transmission destination to be identified, checked, or selected causes an information transmission page to be displayed in which the destination is set to the transmission destination. The message is entered into this information transmission page and transmitted. The information that allows the transmission destination to be identified, checked, or selected may be, for example, a photograph of the person that is the transmission destination. In other words, the sender of the information designates the transmission destination using, for example, a picture of the person that is the transmission destination.

## Description

The present invention relates an electronic information transmission method and electronic information transmission system that use an intranet or the Internet.

With the growth in the use of the Internet in recent years, the number of people using electronic mail as a means of communication has been increasing. Electronic mail that uses the Internet enables transmission of a matter to a destination without requiring transmission at times that are convenient to the destination, as with a telephone, and without requiring lengthy transmission times, as with a facsimile. The use of electronic mail is therefore expected to increase for personal as well as for business use.

The transmission of electronic mail is normally realized by the display of a mail transmission page on a terminal followed by input of a prescribed content and message.

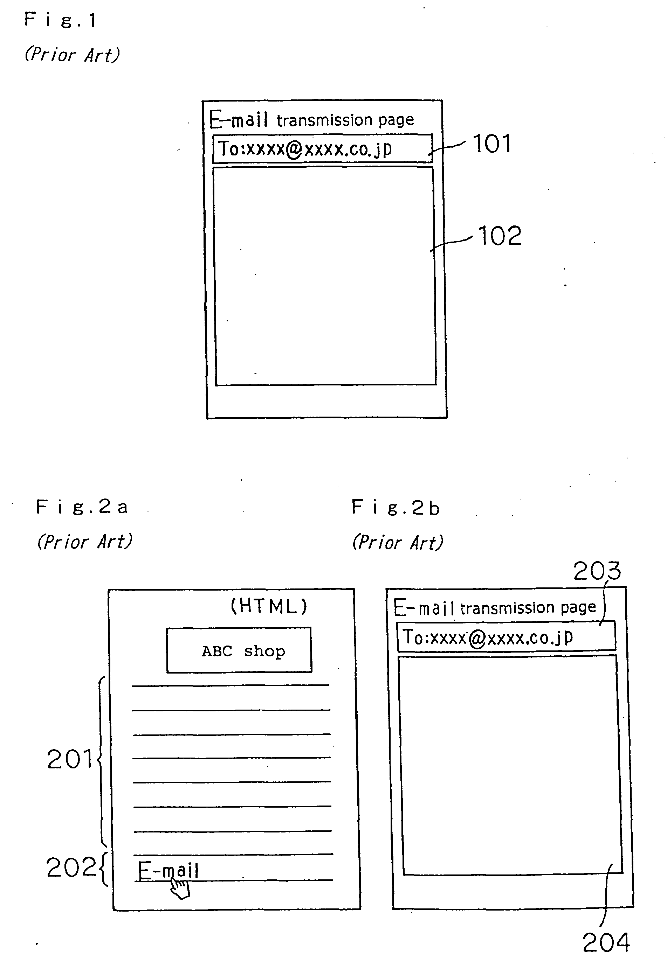

When transmitting electronic mail, the mail address of the electronic mail transmission destination is entered into area 101, which is provided for entry of the transmission destination, as shown in Fig. 1, following which the matter or information to be transmitted is entered into area 102, which is provided for writing the message, and the electronic mail is then sent to the transmission destination. When transmitting the electronic mail, the input of the mail address to area 101 is realized in some cases by the actual input by the user from an input means such as a keyboard, and in some cases by the designation of a desired mail address from mail addresses that have been registered in advance.

The transmitted electronic mail passes by way of a mail server and is received at the transmission destination.

The growth in the use of the Internet led to the realization that home pages could be established on the Internet and these home pages then used to offer information and market goods, and many businesses have now established home pages and are offering information and marketing goods. Home pages can be established by individuals as well as by businesses, and establishing a home page realizes such advantages as enabling the creator of the home page to market or advertise and enabling users of a home page to easily acquire a variety of information.

Home pages as described above are in some cases configured to allow users to easily transmit electronic mail to the creator of the home page by operations on the home page.

As shown in Fig. 2a, in addition to area 201, in which information is displayed, a home page also includes area 202, which provides a link to an electronic mail transmission page having the creator of the home page as the destination.

When a user of the home page clicks on area 202 with the intention of transmitting electronic mail to the creator of the home page, a mailer rises and an electronic mail transmission page is displayed that has the mail address of the home page creator pasted in area 203, which is provided for the entry of the destination address.

The user of the home page then enters the matter or information that is to be transmitted into area 204, which is provided for writing the mail content, and transmits the electronic mail to the home page creator.

Thus, when a user of a home page wishes to send electronic mail to a home page creator, simply clicking on a prescribed area on the home page causes an electronic mail transmission page to be displayed in which the transmission destination is set to the home page creator, and the user of the home page can then send electronic mail to the home page creator by merely entering the electronic mail content.

In some cases, a photograph of a person is displayed on the above-described home page with the aim of improving business results or facilitating communication.

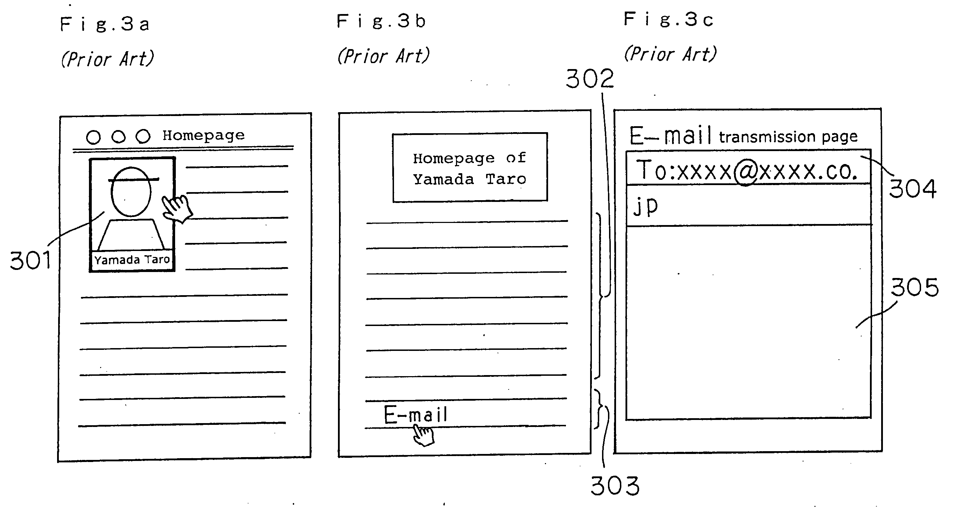

The home page shown in Fig. 3a and the home page shown in Fig. 3b are linked together, the display of the home page shown in Fig. 3b being brought about by clicking on a prescribed area of the home page shown in Fig. 3a.

If a user wishes to view the home page of the person shown in the picture that is displayed in the home page such as shown in Fig. 3a, the user clicks on display area 301 of the photograph, whereupon a home page such as shown in Fig. 3b is displayed of the person shown in the photograph that was clicked.

As shown in Fig. 3b, the content of the home page of the person in the photograph includes, in addition to area 302 for displaying information, area 303 that provides a link to an electronic mail transmission page with the person in the photo as the destination.

If a user of the home page wishes to send electronic mail to the person in the photo, clicking on area 303 shown in Fig. 3b causes a mailer to rise and an electronic mail transmission page to be displayed in which the mail address of the person in the picture is pasted in area 304, which is provided for entering the transmission address, as shown in Fig. 3c.

The user of the home page then enters the matter or information that is to be transmitted into area 304, which is provided for writing the mail content, and transmits the electronic mail to the person in the photo.

Thus, a photos of persons having a relation to the home page creator are displayed on the home page, and the home page of these people can be viewed by clicking on their photos. If electronic mail is to be sent to a person, clicking on a prescribed area on the home page causes an electronic mail transmission page to be displayed in which the transmission destination is set to the person in the photo, and the user of the home page can send electronic mail to the person in the photo by merely entering the mail content.

However, the method of the prior art as described above has the following problems.
(1) Regarding the example shown in Figs. 2a and 2b:
   When sending electronic mail to the creator of a home page, the sender of the electronic mail must search for the area that provides the link to the electronic mail transmission page having the creator of the home page as the destination.
   Typically, the area that provides a link to an electronic mail transmission page is displayed on the last page of the home page, in which case, a user that displays a home page only for the purpose of sending electronic mail must take the time to turn to the last page of the home page.
   In addition, if an electronic mail address that is described on a home page that is displayed on a terminal does not contain elements that enable the user to specify the transmission destination, the user may confuse the electronic mail address of the desired transmission destination with the electronic mail address of a person having the same surname and personal name as the desired transmission destination and thus transmit the electronic mail to an incorrect transmission destination. In the event of this type of error in sending electronic mail, there is the danger that confidential information contained in the transmitted electronic mail will be divulged to an outside individual.
(2) Regarding the example shown in Figs. 3a-3c:
   Although the home page of a person in a photo can be displayed by clicking on the photo displayed in the home page, this information is offered one-way from the person in the photo to the home page user and communication from the user to the person in the photo is not provided for.

In addition, as with the method shown in Figs. 2a and 2b, a user wishing to send electronic mail to a person in a photo using the home page of the person in the photo must search for the area that provides a link to the electronic mail transmission page.

It is an object of the present invention to provide an electronic information transmission method and electronic information transmission system that enables accurate and speedy transmission of electronic mail through the use of a home page.

In the present invention, when prescribed information is to be sent using an information page that is supplied from a communication means, designating information that is displayed on the information page that allows the transmission destination to be identified, checked, or selected causes an information transmission page to be displayed in which the destination is set to the transmission destination, the message is then entered into that information transmission page, and the electronic mail is then transmitted. The information that allows the transmission destination to be identified, checked, or selected may be a photograph of the person that is the transmission destination. In other words, the sender of the information designates the transmission destination using, for example, a picture of the person that is the transmission destination.

This method prevents the transmission of information to an unintended transmission destination and prevents mistakes in selecting the transmission destination of information even when there are users having the same surname and personal name.

The sender of information does not need to spend time to designate the transmission destination of information because an information transmission page is displayed in which the destination is set to this transmission destination by merely designating, for example, the photograph of the person that is the transmission destination, the photograph in this case being the information that allows the transmission destination to be identified, checked, or selected.

In a case in which the information transmission page is displayed so as not to conceal the photograph of the person that is the transmission destination, the sender of the information can create and transmit the information while viewing the photograph of the person that is the transmission destination.

Finally, in a case in which information that can identify the sender, such as a photograph of the sender, is added to the information that is transmitted, the recipient of the information can easily identify the sender of the information.

The above and other objects, features, and advantages of the present invention will become apparent from the following description based on the accompanying drawings which illustrate examples of preferred embodiments of the present invention.

Fig. 1 shows a typical electronic mail transmission page.

Fig. 2a shows a typical home page for explaining an example of operations when sending electronic mail using a home page.

Fig. 2b shows the electronic mail transmission page for explaining an example of the operation when sending electronic mail using a home page.

Fig. 3a shows a typical home page for explaining another example of operations when sending electronic mail using a home page.

Fig. 3b shows a home page that is linked to the home page shown in Fig. 3a.

Fig. 3c shows the electronic mail transmission page for explaining another example of operations when sending electronic mail using a home page.

Fig. 4 shows an embodiment of the electronic information transmission system of the present invention.

Fig. 5 shows another embodiment of the electronic information transmission system of the present invention.

Fig. 6 is a flow chart for explaining the first embodiment and shows operation from display of the home page to transmission of electronic mail in the electronic information transmission system shown in Fig. 4.

Fig. 7a shows a home page for explaining the first embodiment of the transition from display of the home page to the electronic mail transmission page in the electronic information transmission system that is shown in Fig. 4.

Fig. 7b shows a page linked to the page shown in Fig. 7a that displays photographs of persons belonging to the business that established the home page.

Fig. 7c shows an electronic mail transmission page for explaining the first embodiment of the transition from the display of the home page to the electronic mail transmission page in the electronic information transmission system shown in Fig. 4.

Fig. 8 is a flow chart for explaining the second embodiment of the operations from the display of the home page to the transmission of electronic mail in the electronic information transmission system shown in Fig. 4.

Fig. 9a shows a home page for explaining the second embodiment of the transition from the display of the home page to the electronic mail transmission page in the electronic information transmission system shown in Fig. 4.

Fig. 9b shows the electronic mail transmission page for explaining the second embodiment of the transition from the display of the home page to the electronic mail transmission page in the electronic information transmission system shown in Fig. 4.

Fig. 10 shows one example of an icon that is displayed on the screen of a terminal by the electronic information transmission system shown in Fig. 4.

Fig. 11 is a flow chart for explaining the third embodiment of the operations from the display of the home page to the transmission of electronic mail in the electronic information transmission system shown in Fig. 4.

Fig. 12a shows a home page for explaining the third embodiment of the transition from the display of the home page to the electronic mail transmission page in the electronic information transmission system shown in Fig. 4.

Fig. 12b shows a page that is linked to the home page shown in Fig. 12a.

Fig. 12c shows the state in which an individual's photo is displayed in addition to the page shown in Fig. 12b.

Fig. 12d shows the electronic mail transmission page for explaining the third embodiment of the transition from the display of the home page to the electronic mail transmission page in the electronic information transmission system shown in Fig. 4.

Fig. 13 shows an example in which electronic mail transmission page is shown in only a portion of the terminal screen by the electronic information transmission system shown in Fig. 4.

Fig. 14 is a flow chart for explaining the sixth embodiment of the operation from the display of the home page to the transmission of electronic mail in the electronic information transmission system shown in Fig. 4.

Fig. 15a shows a home page for explaining the sixth embodiment of the transition from the display of the home page to the electronic mail transmission page in the electronic information transmission system shown in Fig. 4.

Fig. 15b shows an electronic mail transmission page for explaining the sixth embodiment of the transition from the display of the home page to the electronic mail transmission page in the electronic information transmission system shown in Fig. 4.

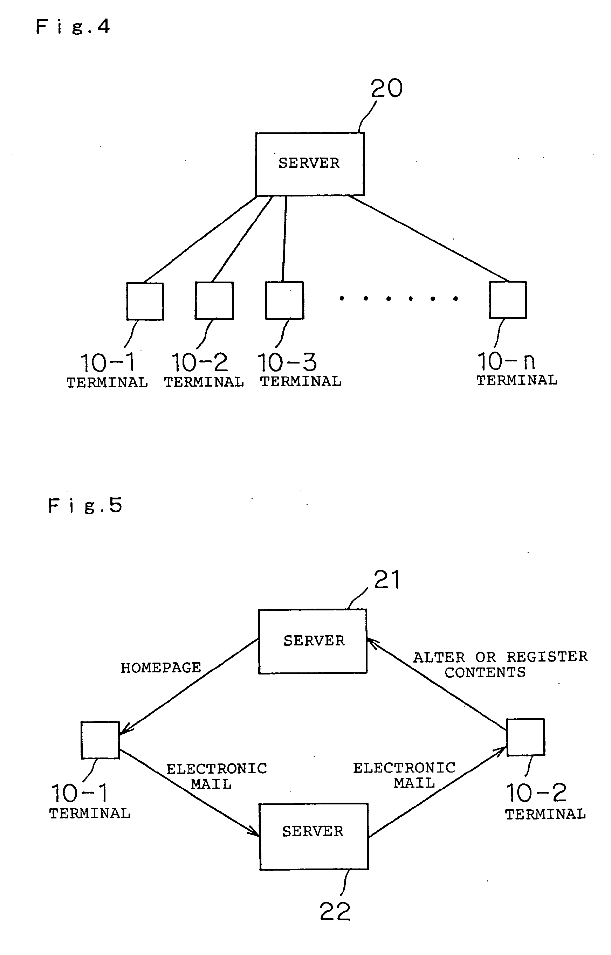

Turning now to Fig. 4, the present embodiment is constituted by a plurality of terminals 10-1∼10-n and server 20, which is a communication means that is configured to allow connection to the plurality of terminals 10-1∼10-n, that registers home pages, which are information pages created by terminals 10-1∼10-n, and that, according to access from terminals 10-1∼10-n, supplies home pages to terminals 10-1 ∼10-n, stores electronic mail, which is information that is transmitted from terminals 10-1∼10-n, and transmits electronic mail to transmission destination terminals 10-1∼10-n.

In the electronic information transmission system that is constructed as described above, home pages that are created by terminals 10-1∼10-n are registered on server 20 and are displayed on the screens of terminals 10-1∼10-n by accessing server 20 from terminals 10-1∼10-n.

In a case in which a user of terminals 10-1∼10-n wishes to send electronic mail to a creator of a home pages that is displayed on terminals 10-1∼10-n or to a terminal having the identification information that is displayed on a home page, clicking on a prescribed area in the home page causes a mailer to rise and an electronic mail transmission page to be displayed, this information transmission page having the destination of electronic mail set to the desired transmission destination.

The user of terminals 10-1∼10-n in which the electronic mail transmission page is displayed enters the matter or information that is to be transmitted to the transmission destination onto the electronic mail transmission page and sends.

The electronic mail that is sent from terminals 10-1 ∼10-n is transmitted to the desired transmission destination by way of server 20.

When users of terminals 10-1∼10-n wish to alter the content of home pages that are registered on server 20, they first connect to server 20 and then update or erase the content of the registered home pages.

In the electronic information transmission system shown in Fig. 4, the functions of registering home pages and storing electronic mail are provided in a single server 20, but in a case in which terminals 10-1∼10-n have each contracted with different providers, the servers that register home pages are different from the servers that store electronic mail.

In the embodiment shown in Fig. 5, terminal 10-1 is contracted with a provider having server 22 and terminal 10-2 is contracted with a provider having server 21.

As a result, a home page created by terminal 10-2 is stored in server 21, and electronic mail that is transmitted from terminal 10-1 is transmitted to terminal 10-2 by way of server 22.

The operations from the display of a home page to the transmission of electronic mail in an electronic information transmission system that is configured as shown above are next described in detail. In the following explanation, an example is given in which terminal 10-1 browses the home page of a business to which terminal 10-2 shown in Fig. 4 belongs, and terminal 10-1 transmits electronic mail to terminal 10-2.

### First Embodiment

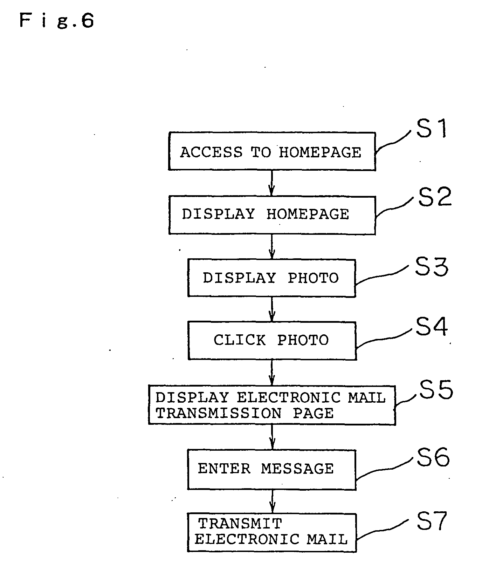

Fig. 6 is a flow chart for explaining the first embodiment of the operations from the display of the home page to the transmission of electronic mail in the electronic information transmission system shown in Fig. 4.

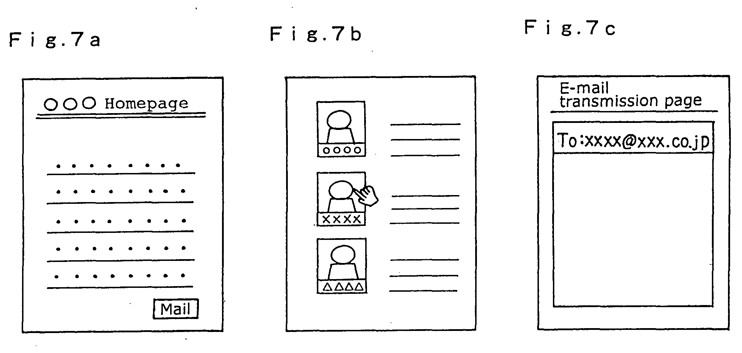

The user of terminal 10-1 accesses by means of terminal 10-1 the home page of the business to which the user of terminal 10-2 belongs in Step S1, this home page being registered in server 20. The home page of the business to which the user of terminal 10-2 belongs is displayed on the screen of terminal 10-1 in Step S2, , and this home page includes a mail button such as shown in Fig. 7a to be clicked on when a user wishes to send electronic mail.

The user of terminal 10-1 clicks on the mail button in the home page that is displayed on the screen of terminal 10-1, whereupon, photographs and names of people belonging to the business that created the home page are displayed on the screen of terminal 10-1 such as shown in Fig. 7b in Step S3, these photos and names being information that can identify transmission destinations.

The user of terminal 10-1 clicks on the area that is made up by the photo and name of the user of terminal 10-2 to whom he wishes to send electronic mail among the users whose photos and names are displayed on the screen of terminal 10-1 in Step S4, whereupon a mailer rises and, an electronic mail transmission page such as shown in Fig. 7c is displayed in which the transmission destination of electronic mail is set to terminal 10-2 in Step S5.

The user of terminal 10-1 on which the electronic mail transmission page is displayed enters the matter or information that he wishes to transfer to the transmission destination into the electronic mail transmission page in Step S6, and transmits the electronic mail in Step S7.

The electronic mail that is transmitted from terminal 10-1 is sent to terminal 10-2, the transmission destination, by way of server 20.

Thus, in this embodiment, the photo of a person belonging to the business that created the home page is displayed on terminal 10-1 before electronic mail is sent, the sender of the electronic mail designates the transmission destination by means of the photo that is displayed on terminal 10-1, and then sends the electronic mail. As a result, the mistaken transmission of electronic mail to an unwanted transmission destination can be prevented.

Furthermore, even if there is a user having the same surname and personal name as the user that is the transmission destination of electronic mail, the danger of an error in the transmission destination of electronic mail is eliminated because the transmission destination of the electronic mail is specified by means of a photograph.

### Second Embodiment

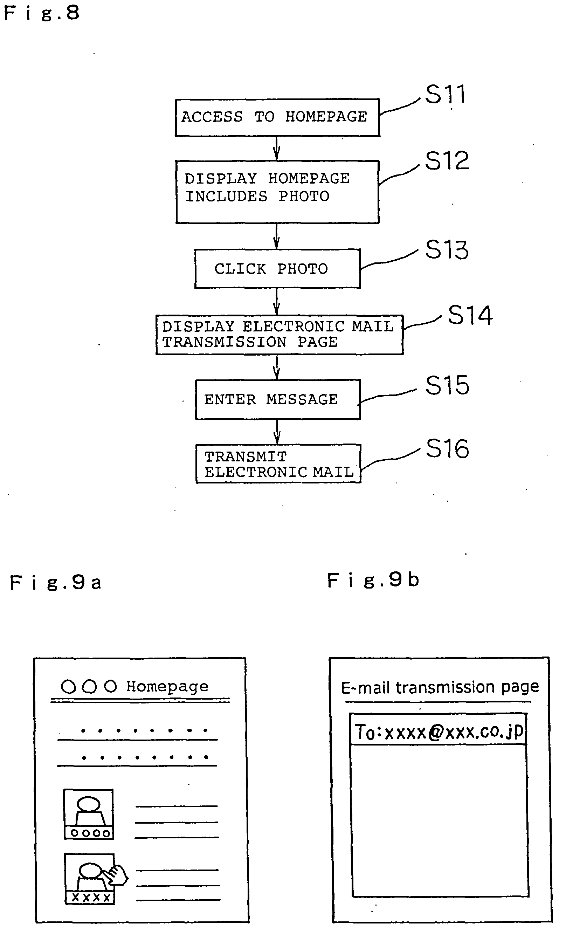

Fig. 8 is a flow chart for explaining the second embodiment of the operations from the display of the home page to the transmission of electronic mail in the electronic information transmission system shown in Fig. 4.

When the user of terminal 10-1 accesses the home page of a business to which the user of terminal 10-2 belongs and that is registered on server 20 in Step S11, a home page such as shown in Fig. 9a of the business to which the user of terminal 10-2 belongs is displayed on the screen of terminal 10-1 in Step S12. This home page includes photographs and names of people belonging to the business that established the home page.

The user of terminal 10-1 clicks on the area that is made up by the name and photograph of the user of terminal 10-2 that is the desired transmission destination of electronic mail among the photographs and names that are displayed on the screen of terminal 10-1 in Step S13, whereupon a mailer rises. An electronic mail transmission page such as shown in Fig. 9b is displayed in which the transmission destination of the electronic mail is set to terminal 10-2 in Step S14.

The user of terminal 10-1 on which the electronic mail transmission page is displayed enters the matter or information that he wishes to transfer to the transmission destination into the electronic mail transmission page in Step S15 and sends the electronic mail in Step S16.

The electronic mail that is sent from terminal 10-1 is transmitted to terminal 10-2, the transmission destination, by way of server 20.

Thus, in this embodiment, photographs of the people belonging to the business that created the home page are displayed on terminal 10-1 at the time the home page is accessed, and the sender of the electronic mail designates the transmission destination by means of the photographs that are displayed on terminal 10-1 and sends the electronic mail. Compared with the method described in the first embodiment, this embodiment can eliminate the time needed to search for and click on the mail button when it is desired to send electronic mail.

In the above-described first and second embodiment, clicking on the area that is displayed on the screen of terminal 10-1 that is made up by the photograph and name of the user that is to be the electronic mail transmission destination causes a mailer to rise and an electronic mail transmission page to be displayed, but the area that can be clicked may also be only the photograph or only the name. Alternatively, the area that can be clicked may be set to only a portion of the photograph (for example, the nose or the mouth).

A special icon may also be displayed in an area adjacent to the area that is made up by the photograph and name, and clicking on the icon may bring about the display of an electronic mail transmission page having a specific electronic mail transmission destination.

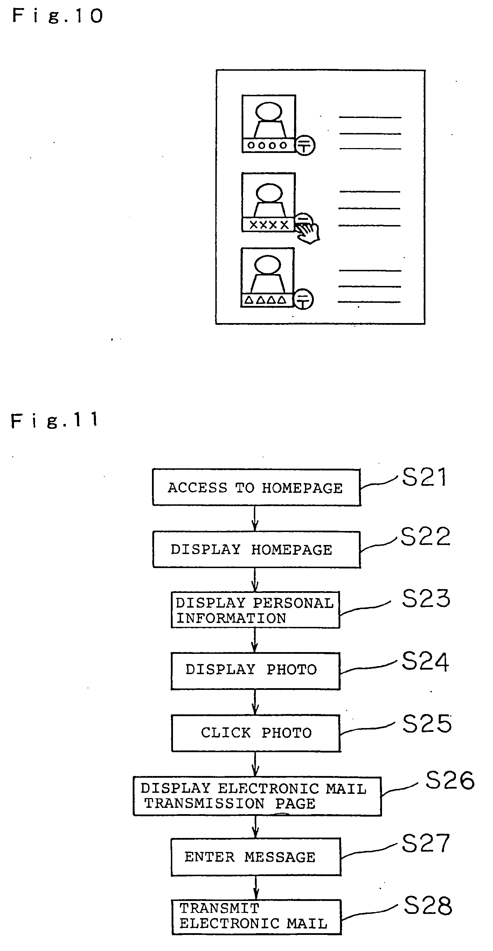

As shown in Fig. 10, special icons are displayed adjacent to the areas that are made up by the photographs and names that are displayed on terminal 10-1, and clicking on the icon that is displayed adjacent to the area made up by the photograph and name of the user of terminal 10-2 that is to be the electronic mail transmission destination among the displayed icons causes an electronic mail transmission page to be displayed.

Although the icon is displayed at the same time as the photograph and name in this embodiment, an icon for designating that area may also be displayed upon movement of the cursor to the area that is made up by the photograph and name of the person that is the desired transmission destination.

### Third Embodiment

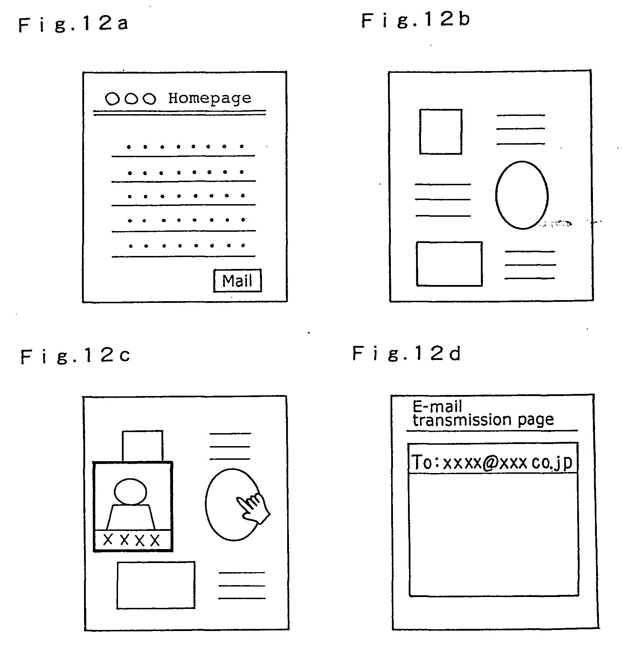

Fig. 11 is a flow chart for explaining the third embodiment of the operations from the display of the home page to the transmission of electronic mail in the electronic information transmission system shown in Fig. 4.

When the user of terminal 10-1 accesses the home page of the business that is registered in server 20 and to which the user of terminal 10-2 belongs in Step S21, the home page of the business to which the user of terminal of 10-2 belongs is displayed on the screen of terminal 10-1 in Step S22, and as shown in Fig. 12a, this home page includes a mail button that is to be clicked when a user wishes to send electronic mail.

When the user of terminal 10-1 clicks on the mail button in the home page that is displayed on the screen of terminal 10-1, a page is displayed on the screen of terminal 10-1 in Step S23 such as is shown in Fig. 12b, and this page includes electronic information of the people belonging to the business that established the home page.

When the user of terminal 10-1 moves the cursor to the specific area that describes electronic information of the user of terminal 10-2 that is the desired transmission destination of electronic mail among the electronic information that is displayed on the screen of terminal 10-1, the photograph and name of the user of terminal 10-2 is displayed as shown in Fig. 12c in Step S24.

The user of terminal 10-1 checks the photograph and name of the user of terminal 10-2 that is displayed on the screen of terminal 10-1. A mailer rises when the user clicks on the specific area that describes the electronic information of the user of terminal 10-2 in Step S25, and an electronic mail transmission page such as is shown in Fig. 12d is displayed in which the transmission destination of electronic mail is set to terminal 10-2 in Step S26.

The user of terminal 10-1 on which the electronic mail transmission page is displayed enters the matter or information that is to be transferred to the transmission destination onto the electronic mail transmission page in Step S27, and sends the electronic mail in Step S28.

The electronic mail that is sent from terminal 10-1 is transmitted by way of server 20 to terminal 10-2, which is the transmission destination.

### Fourth Embodiment

Rather than displaying the electronic mail transmission pages over the entire screen in the above-described first to third embodiments, the electronic mail transmission page may be displayed in a portion of the screen of terminal 10-1 such that the electronic mail transmission page does not conceal the photograph of the user of terminal 10-2 that is the transmission destination of electronic mail.

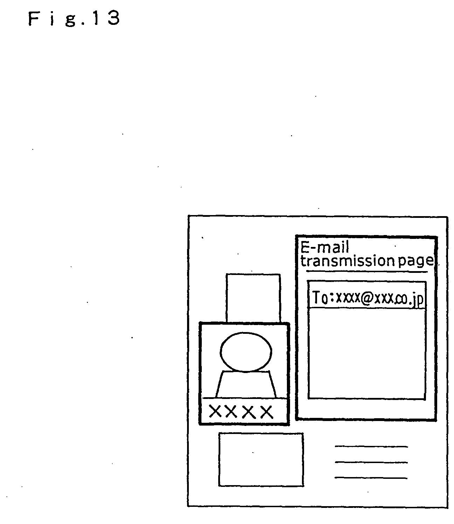

In the embodiment as shown in Fig. 13, the electronic mail transmission page is displayed in only a portion and not displayed over the entire screen of terminal 10-1, and the photograph of the user of terminal 10-2 that is the transmission destination of electronic mail therefore continues to be displayed even when the electronic mail transmission page is displayed on terminal 10-1.

As a result, the user of terminal 10-1 can create and send electronic mail while viewing the photograph of the user of terminal 10-2 that is to be the transmission destination of the electronic mail.

Furthermore, although the photograph and name of the person that is the transmission destination is displayed in the above-described first to fourth embodiments, a mark that can specify the business organization may be displayed, and electronic mail may be sent to the business organization by clicking on this mark.

### Fifth Embodiment

A group photograph may be displayed on terminal 10-1, and a desired person may be selected from among the people that are shown in the group photograph and electronic mail sent to that person.

The user of terminal 10-1 selects and clicks on the face of the user of terminal 10-2 from among the people that are shown in a group photograph that is displayed on terminal 10-1, the user of terminal 10-2 being the person that the user of terminal 10-1 wishes to send electronic mail to.

The mailer then rises and an electronic mail transmission page is displayed in which the electronic mail transmission destination is set to terminal 10-2.

The user of terminal 10-1 on which the electronic mail transmission page is displayed then enters onto the electronic mail transmission page the matter or information that he wishes to transfer to the transmission destination and sends the electronic mail.

The electronic mail that is sent from terminal 10-1 is transmitted by way of server 20 to terminal 10-2.

### Sixth Embodiment

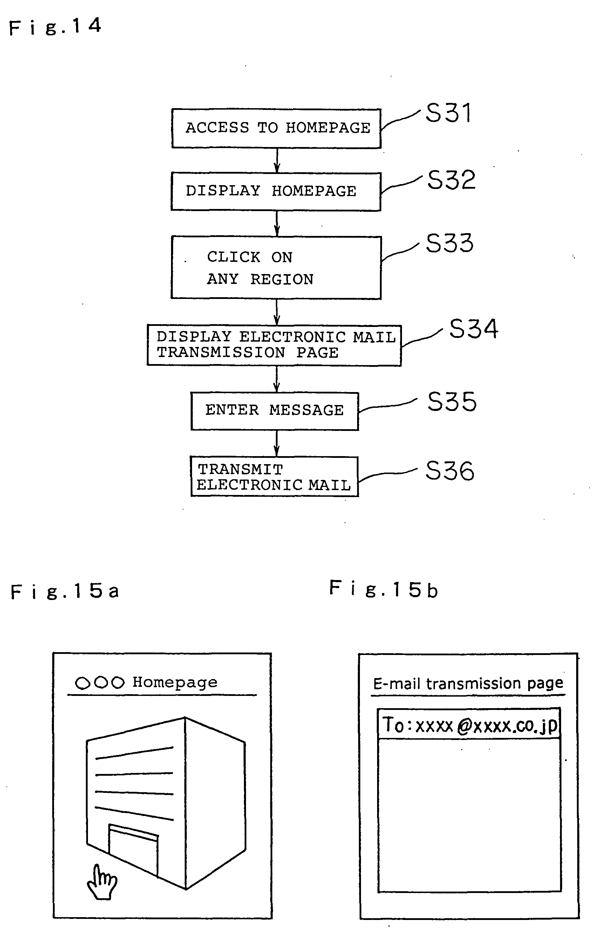

Fig. 14 is a flow chart for explaining the sixth embodiment of the operations from the display of the home page to the transmission of electronic mail in the electronic information transmission system shown in Fig. 4.

The user of terminal 10-1 accesses the home page of a user of a business that is registered on server 20 in Step S31, whereupon the home page of the business organization such as shown in Fig. 15a is displayed on the screen of terminal 10-1 in Step S32. This display screen displays information that allows the user of terminal 10-1 to identify the business or organization, this information preferably being distinctive, such as a picture of the business headquarters.

The entire area of the page such as shown in Fig. 15a provides a link to an electronic mail transmission page, whereby a mailer rises when the user of terminal 10-1 clicks on any region within the page in Step S33, and an electronic mail transmission page such as shown in Fig. 15b is displayed in which the electronic mail transmission destination is set to the business that established the home page in Step S34.

The user of terminal 10-1 on which the electronic mail transmission page is displayed enters into the electronic mail transmission page the matter or information that is to be transmitted in Step S35, and the electronic mail is transmitted in Step S36.

The electronic mail that is sent from terminal 10-1 is transmitted to the transmission destination business by way of server 20.

Thus, in this embodiment, a page that shows a distinctive feature of the transmission destination is displayed on terminal 10-1 when the home page is accessed, and the sender of electronic mail transmits the electronic mail after confirming the transmission destination by means of the displayed feature, and mistaken transmission of electronic mail to an unwanted destination can therefore be eliminated.

### Seventh Embodiment

In the above-described first to fifth embodiments, the user of terminal 10-1 may also add his own picture to the electronic mail when transmitting electronic mail from terminal 10-1 to terminal 10-2.

When transmitting electronic mail in this embodiment, a photograph of the user of terminal 10-1, who is the transmission originator, is added to electronic mail. As for the method of adding the photograph, the photo may be included in the mail itself or appended as an attached file.

The user of terminal 10-2 that receives the electronic mail can therefore easily recognize the originator of the electronic mail by means of information such as the mail address contained in the electronic mail and the attached photograph.

In the above-described embodiments, examples were presented in which the home page that is displayed on the screen of terminal 10-1 is the home page of the business to which the user of terminal 10-2 belongs, the user of terminal 10-2 being the transmission destination of the electronic mail, and electronic mail was transmitted to terminal 10-2 using this home page. However, the home page that is displayed on the screen of terminal 10-1 may also be an individual's home page that was established by the user of terminal 10-2, and electronic mail may be sent to terminal 10-2, which is the creator of the home page.

In such a case, the picture or name of the user of terminal 10-2 is displayed when the home page that was established by the user of terminal 10-2 is displayed on terminal 10-1, and an electronic mail transmission page in which the transmission destination of electronic mail is set to terminal 10-2 is displayed on the sdreen of terminal 10-1 when the user of terminal 10-1 clicks on the photograph or name. The user of terminal 10-1 then enters onto the electronic mail transmission page the matter or information that is to be transmitted to the transmission destination and sends the electronic mail.

Although the transmission destination of electronic mail is designated by clicking on the picture or name of the person of the transmission destination or on any position of the page in the above-described embodiments, the present invention is not limited to clicking and may include a method in which, for example, the transmission destination is specified by touching the screen as in a touch panel.

Furthermore, although examples have been presented in which the page for creating and transmitting electronic mail was a single electronic mail transmission page, different pages may be used for creating and transmitting electronic mail.

Although examples have been presented in which the electronic mail transmission page was displayed using a home page that is supplied from a server, the present invention is not limited to a home page and may include a method in which, for example, an electronic mail transmission page in which the transmission destination is set is displayed using the i-mode page of a portable telephone.

Further, although examples have been presented in which the information that is sent is electronic mail, the present invention may also include image information or sound information, and in the case of sound information, the information supplied from the server, the designation of the transmission destination, and the switching of modes may all be realized by voice.

In the present invention as described hereinabove, when transmitting information using an information page that is supplied from a communication means, the transmission destination is specified by designating information that allows identification, confirmation, or selection of the transmission destination such as a picture of the person that is to be the transmission destination and that is displayed on the information page, whereby mistaken transmission of information to an unwanted transmission destination can be prevented and the information sender can quickly and easily specify the transmission destination of the information.

While preferred embodiments of the present invention have been described using specific terms, such description is for illustrative purposes only, and it is to be understood that changes and variations may be made without departing from the spirit or scope of the following claims.

## Claims

1. An electronic information transmission method wherein designating a prescribed area on an information page that is supplied from a communication means that is connected to a plurality of terminals causes an information transmission page for creating and/or transmitting desired information to be displayed on a said terminal, and said desired information is transmitted to a desired transmission destination using said information transmission page; said electronic information transmission method comprising steps of:
displaying information on said information page that allows said transmission destination to be identified, confirmed, or selected;
designating said transmission destination by designating said information;
displaying on said terminal an information transmission page in which the destination is set to said transmission destination; and
transmitting said desired information to said transmission destination using said information transmission page.

2. An electronic information transmission method wherein designating a prescribed area on an information page that is supplied from a communication means that is connected to a plurality of terminals causes an information transmission page for creating and/or transmitting desired information to be displayed on a said terminal, and said desired information is transmitted to a desired transmission destination using said information transmission page; said electronic information transmission method comprising steps of:
designating a transmission destination of said desired information by designating information that is displayed on said information page that allows the transmission destination to be identified, confirmed, or selected;
displaying on said terminal an information transmission page in which the destination is set to said transmission destination; and
transmitting said desired information to said transmission destination using said information transmission page.

3. An electronic information transmission method wherein an information transmission page for creating and/or transmitting desired information is displayed on a plurality of terminals that are interconnected by way of a communication means and said desired information is transmitted to a desired transmission destination using said information transmission page; said electronic information transmission method including a step of displaying on said terminals information that allows said transmission destination to be identified, confirmed, or selected before displaying said information transmission page.

4. An electronic information transmission method wherein designating a prescribed area on an information page that is supplied from a communication means that is connected to a plurality of terminal causes an information transmission page for creating and/or transmitting desired information to be displayed on said terminals, and said desired information is transmitted to a desired transmission destination using said information transmission page; said electronic information transmission method comprising steps of:
displaying electronic information on said information page that relates to said transmission destination;
displaying information that allows said transmission destination to be identified, checked or selected by designating the electronic information;
designating said transmission destination by designating the information;
displaying on said terminal an information transmission page in which the destination is set to said transmission destination; and
transmitting said desired information to said transmission destination using said information transmission page.

5. An electronic information transmission method wherein designating a prescribed area on an information page that is supplied from a communication means that is connected to a plurality of terminals causes an information transmission page for creating and/or transmitting desired information to be displayed on said terminals, and said desired information is transmitted to a desired transmission destination using said information transmission page; said electronic information transmission method comprising steps of:
displaying, on said information page: information that allows said transmission destination to be identified, checked, or selected; and a specific icon adjacent to the information;
designating said transmission destination by designating the icon;
displaying an information transmission page in which the destination is set to said transmission destination; and
transmitting said desired information to said transmission destination using said information transmission page.

6. An electronic information transmission method wherein designating a prescribed area on an information page that is supplied from a communication means that is connected to a plurality of terminals causes an information transmission page for creating and/or transmitting desired information to be displayed on said terminal, and said desired information is transmitted to a desired transmission destination using said information transmission page; said electronic information transmission method comprising steps of:
specifying the transmission destination of said desired information by designating an icon that is displayed adjacent to information that is displayed on said information page that allows the transmission destination to be identified, checked or selected;
displaying on said terminals an information transmission page in which the destination is set to said transmission destination; and
transmitting said desired information to said transmission destination using said information transmission page.

7. A method according to any one of claims 1 to 6
wherein said information that allows said transmission destination to be identified, checked, or selected is a picture of the person or a mark that can specify, for example, a business organization that is the transmission destination.

8. A method according to any one of claims 1 to 7
wherein said information that allows said transmission destination to be identified, checked, or selected is the name and picture of the person or a mark that can specify, for example, a business organization that is the transmission destination, and wherein the destination of said desired information is specified by designating said picture, name, or mark.

9. A method according to any one of claims 1 to 8
wherein said information transmission page is displayed so as not to conceal the picture of the person or the mark that can specify, for example, the business organization that is said transmission destination.

10. A method according to any one of claims 1 to 9
wherein said transmission destination is specified by designating any position on the page on which is displayed said information that allows said transmission destination to be identified, checked, or selected.

11. A method according to any one of claims 1 to 10
wherein information that allows identification of the sender is appended to said desired information.

12. An electronic information transmission method according to claim 11 wherein said information that allows identification of the sender is a picture of the person that is the sender.

13. An electronic information transmission method wherein designating prescribed information among an assemblage of information that is supplied from a communication means that is connected to a plurality of terminals causes said terminals to switch to an information transmission mode for entering and/or transmitting desired information, and wherein said desired information is transmitted to a desired transmission destination using said information transmission mode; said electronic information transmission method comprising steps of
transmitting to said terminal information that allows said transmission destination to be identified, checked, or selected;
designating the information; and
switching to an information transmission mode in which the destination is set to said transmission destination.

14. An electronic information transmission system comprising:
a plurality of terminals; and
a communication means that is constructed to allow connection to said plurality of terminals and that supplies information pages to said plurality of terminals, stores information that is transmitted from said plurality of terminals, and furthermore, causes an information transmission page for creating and/or transmitting desired information to be displayed on said terminals when prescribed areas on said information pages are designated by said terminals;
wherein:
said communication means, according to designation made on said information page, displays information that allows a transmission destination to be identified, checked, or selected in order to an display information transmission page in which said desired transmission destination is made the destination; and
said terminals transmit said desired information to a desired transmission destination using said information transmission page.

15. An electronic information transmission system comprising:
a plurality of terminals; and
a communication means that is constructed to allow connection to said plurality of terminals and that supplies information pages to said plurality of terminals, stores information that is transmitted from said plurality of terminals, and furthermore, causes an information transmission page for creating and/or transmitting desired information to be displayed on said terminals when prescribed areas on said information pages are designated by said terminals;
wherein:
said communication means specifies the destination of said desired information by means of the designation by said terminals of information that allows transmission destinations that are displayed on said information pages to be identified, checked, or selected; and
said terminals transmit said desired information to a desired transmission destination using said information transmission page.

16. An electronic information transmission system comprising:
a plurality of terminals; and
a communication means that is constructed to allow connection to said plurality of terminals and that supplies information pages to said plurality of terminals, stores information that is transmitted from said plurality of terminals, and furthermore, causes an information transmission page for creating and/or transmitting desired information to be displayed on said terminals when prescribed areas on said information pages are designated by said terminals;
wherein:
said communication means displays on said information page both information that allows said transmission destination to be identified, checked, or selected and, in an area adjacent to this information, an icon that, when designated, causes an information transmission page in which said transmission destination is made the destination to be displayed; and
said terminals transmit said desired information to a desired transmission destination using said information transmission page.

17. An electronic information transmission system comprising:
a plurality of terminals; and
a communication means that is constructed to allow connection to said plurality of terminals and that supplies information pages to said plurality of terminals, stores information that is transmitted from said plurality of terminals, and furthermore, causes an information transmission page for creating and/or transmitting desired information to be displayed on said terminals when prescribed areas on said information pages are designated by said terminals;
wherein:
said communication means specifies the destination of said desired information by means of the designation by said terminals of icons that are displayed adjacent to information that allows transmission destinations that are displayed on said information pages to be identified, checked, or selected; and
said terminals transmit said desired information to a desired transmission destination using said information transmission page.

18. A system according to claim 14, 15, 16 or 17
wherein said information that allows said transmission destination to be identified, checked, or selected is a picture of the person or a mark that can specify, for example, a business organization that is the transmission destination.

19. A system according to claim 14, 15, 16, 17 or 18
wherein said information that allows said transmission destination to be identified, checked, or selected is the name and picture of the person or a mark that can specify, for example, a business organization that is the transmission destination, and designating the picture or name or mark causes the destination of said desired information to be specified.

20. A system according to claim 18 or 19
wherein said information transmission page is displayed so as not to conceal the picture of the person or the mark that can specify, for example, a business organization that is said transmission destination.

21. A system according to any one of claims 14 to 20
wherein said transmission destination is specified by designating any position of the page on which is displayed said information that allows said transmission destination to be identified, checked, or selected.

22. A system according to any one of claims 14 to 21
wherein said plurality of terminals append information that allows identification of the sender to said desired information.

23. A system according to any one of claims 16 to 22
wherein said plurality of terminals append information that allows identification of the sender to said desired information.

24. A system according to claims 22 or 23
wherein said information that allows identification of the sender is a picture of the person that is the sender.

25. An electronic information transmission system comprising:
a plurality of terminals; and
a communication means that is constructed to allow connection to said plurality of terminals and that supplies an assemblage of information to said plurality of terminals, stores information that is transmitted from said plurality of terminals, and furthermore, switches said terminals to an information transmission mode for creating and/or transmitting desired information when prescribed information is designated from among said assemblage of information by said terminals;
wherein:
said communication means includes, in said assemblage of information, information that allows said transmission destination to be identified, checked or selected, the designation of which causes switching to an information transmission mode in which the destination is set to a desired transmission destination; and
said terminals transmit said desired information to a desired transmission destination using said information transmission mode.

26. A server that is constructed to allow connection to a plurality of terminals and that stores information that is transmitted from said plurality of terminals; and that further:
displays on said terminals information that allows a desired transmission destination to be identified, checked, or selected, and
when said information is designated, displays on said terminals an information transmission page for creating and/or transmitting desired information in which said transmission destination is made the destination.

27. A server that is constructed to allow connection to a plurality of terminals and that stores information that is transmitted from said plurality of terminals; and that further:
displays on said terminals electronic information that relates to transmission destinations of said information; and
when the electronic information is designated, displays on said terminals screen information that allows said transmission destination to be identified, checked, or selected.
